(19) **Europäisches Patentamt**
**European Patent Office**
**Office européen des brevets**

(11) **EP 1 642 141 B1**

(12) **EUROPÄISCHE PATENTSCHRIFT**

(45) Veröffentlichungstag und Bekanntmachung des Hinweises auf die Patenterteilung:
**02.01.2008 Patentblatt 2008/01**

(21) Anmeldenummer: **04738798.0**

(22) Anmeldetag: **26.06.2004**

(51) Int Cl.:
*G01P 15/00* *(2006.01)*   *B60R 21/01* *(2006.01)*

(86) Internationale Anmeldenummer:
**PCT/DE2004/001351**

(87) Internationale Veröffentlichungsnummer:
**WO 2005/001488 (06.01.2005 Gazette 2005/01)**

(54) **VERFAHREN ZUR AUFPRALLERKENNUNG MITTELS UPFRONT-SENSORIK UND VORRICHTUNG ZUR DURCHFÜHRUNG DES VERFAHRENS**

METHOD FOR RECOGNISING A COLLISION BY MEANS OF AN UPFRONT SENSOR SYSTEM AND DEVICE FOR CARRYING OUT SAID METHOD

PROCEDE DE RECONNAISSANCE DE COLLISION AU MOYEN D'UN SYSTEME DE DETECTION FRONTAL ET DISPOSITIF POUR METTRE EN OEUVRE LE PROCEDE

(84) Benannte Vertragsstaaten:
**DE ES FR GB SE**

(30) Priorität: **27.06.2003 DE 10328948**

(43) Veröffentlichungstag der Anmeldung:
**05.04.2006 Patentblatt 2006/14**

(73) Patentinhaber: **ROBERT BOSCH GMBH**
**70442 Stuttgart (DE)**

(72) Erfinder:
• **MATTES, Bernhard**
**74343 Sachsenheim (DE)**
• **MALICKI, Siegfried**
**74379 Ingersheim (DE)**
• **KOEHLER, Armin**
**74343 Sachsenheim (DE)**

(56) Entgegenhaltungen:
**EP-B- 0 980 323**    **WO-A-89/11986**
**WO-A-90/03289**    **WO-A-98/06604**
**WO-A-02/053419**    **WO-A-02/068246**
**DE-A- 19 537 546**

EP 1 642 141 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

STAND DER TECHNIK

Die vorliegende Erfindung betrifft eine Vorrichtung und ein Verfahren für die Upfront-Sensorik, und betrifft insbesondere eine Vorrichtung und ein Verfahren zur Aufprallerkennung eines sich nach einem Aufprall bewegenden Objekts, insbesondere eines Fahrzeugs, wobei Beschleunigungssignale, welche in unterschiedlichen Erfassungsachsen aufgenommen wurden, zur Aufprallklassifizierung herangezogen werden.

Bei Rückhaltesystemen in der Automobilindustrie werden zur Aufprallerkennung ausgelagerte Sensoren eingesetzt. So ist in der DE 196 09 290 C2 beschrieben, für die Frontaufprallsensierung sogenannte ausgelagerte Upfront-Sensoren (UFS) zu verwenden, welche sich in der Deformationszone befinden, so dass in der frühen Aufprallphase (Crash-Phase) die Aufprallintensität bzw. Schwere eines Crashes erkannt werden kann, indem das Eindringverhalten einer Barriere in die Knautschzone des Fahrzeugs sensiert wird.

Ein wesentliches Problem bei einer Erkennung bzw. Klassifizierung eines Aufpralls besteht darin, dass die Upfront-Sensoren selbst aus der vorgesehenen Erkennungslage bzw. Erfassungsrichtung während des Aufpralls ausgelenkt werden, wodurch sich infolge einer geänderten Erfassungsrichtung auch eine entsprechende Erfassungsgenauigkeit reduziert.

Zur Lösung des Problems ist vorgeschlagen worden, in einem Fusionskonzept angeordnete Sensoren für Auslöseentscheidungen heranzuziehen. In nachteiliger Weise sind sämtliche Upfront-Sensoren jedoch so angeordnet, dass sie in der Fahrzeug-Längsachse - der x-Richtung - sensieren. Derartige Upfront-Sensoren sind in der Regel an dem Kühlerquerträger oder ähnlichen Einbauorten angebracht.

Es ist somit ein wesentlicher Nachteil vorhandener Vorrichtungen zur Aufprallsensorik, dass ein in Fahrzeug-Längsachse angeordneter Beschleunigungssensor bei einem Fahrzeugaufprall eine Richtungsänderung erfährt, so dass eine Messungenauigkeit hinsichtlich des erfassten Beschleunigungswerts auftreten kann.

Ein derartiges Wegdrehen des Sensors führt dazu, dass ein kleinerer oder größerer Teil einer wichtigen Information verloren geht. Dies führt zu dem weiteren Nachteil, dass einem nachfolgenden Auslösealgorithmus für ein angeschlossenes Rückhaltesystem lediglich eine reduzierte Sensorinformation bereitgestellt werden kann.

Die Betriebsweise des nachfolgenden Rückhaltesystems basiert somit auf einer nicht korrekten Sensorinformation, was in nachteiliger Weise zu einer Fehlfunktion des gesamten Aufprallschutzsystems führen kann.

Aus WO 98/06604 A1 ist eine Anordnung von Beschleunigungssensoren in Fahrzeuglängs- und Fahrzeugquerrichtung bekannt. Zusätzlich ist auch ein Drehbewegungssensor vorgesehen, wobei in Abhängigkeit von den Signalen dieser Sensoren ein Auslösesignal für Rückhaltemittel erzeugt werden kann. Aus EP 0 980 323 ist es bekannt, in Abhängigkeit von Signalen von Fahrzeuglängs- und Fahrzeugquerbeschleunigungssensoren ein Auslösesignal für Personenschutzmittel zu erzeugen.

VORTEILE DER ERFINDUNG

Die erfindungsgemäße Vorrichtung zur Aufprallerkennung mit den Merkmalen des Anspruchs 1 und das erfindungsgemäße Verfahren mit den Merkmalen des Anspruchs 3 weist gegenüber dem bekannten Lösungsansatz den Vorteil auf, dass eine sichere Klassifizierung des Aufpralls auch dann gewährleistet ist, wenn eine Erfassungsrichtung der Sensoreinrichtung, welche zur Beschleunigungerfassung dient, während eines Aufpralls verändert wird.

Diese Aufgabe wird erfindungsgemäß durch eine Vorrichtung mit den Merkmalen des Patentanspruchs 1 gelöst. Ferner wird die Aufgabe durch ein im Patentanspruch 3 angegebenes Verfahren gelöst.

Weitere Ausgestaltungen der Erfindung ergeben sich aus den Unteransprüchen.

Ein wesentlicher Gedanke der Erfindung besteht darin, Beschleunigungssignale unterschiedlicher Sensoreinrichtungen, welche in unterschiedlichen Erfassungsrichtungen empfindlich sind, miteinander zu kombinieren, derart, dass bei einer Änderung einer Erfassungsrichtung eines Sensors die Beschleunigungssignale weiterer Sensoren herangezogen werden können, um das durch die geänderte Erfassungsrichtung veränderte Sensorsignal des ersten Sensors zu korrigieren. Auf diese Weise besteht der Vorteil, dass ein von einer ersten Sensoreinrichtung bereitgestelltes erstes Beschleunigungssignal mittels weiterer Sensoreinrichtungen, welche weitere Beschleunigungssignale liefern, korrigiert werden kann, um ein korrigiertes erstes Beschleunigungssignal zu erhalten, mit welchem ein zuverlässiges Klassifizierungssignal zur Aufprallerkennung bereitgestellt werden kann.

Es ist somit ein weiterer Vorteil der vorliegenden Erfindung, dass auch dann, wenn sich ein in Fahrzeug-Längsrichtung sensierender Upfront-Sensor während des Aufpralls aus seiner definierten Sensierrichtung wegdreht, eine im Auslösealgorithmus reduzierte Information nicht zu einer verspäteten Auslösung oder gar vollständigen Unterdrückung der Auslösung von Rückhaltemitteln bzw. Rückhaltesystemen eines Fahrzeugs führt.

In vorteilhafter Weise erkennt eine Auswerteeinheit den Zustand der reduzierten Information, so dass der Algorithmus durch Sensordatenfusion die vollständige Information wiedergewinnen kann.

Durch die erfindungsgemäße Sensoranordnung mit zusätzlichen Erfassungsachsen kann in zweckmäßiger Weise der Fall einer reduzierten Information erkannt und auf eine Rückfallebene umgeschaltet werden, wobei ein Auslöseverhalten ohne eine Information einer Upfront-Sensorik bestimmbar ist.

Weiterhin ist es vorteilhaft, dass ein in x-Richtung gemessenes Sensorsignal, welches durch das Wegdrehen in seiner Größe verfälscht ist, mittels in anderen Erfassungsachsen -y/z-Richtungen - gemessenen Signalen korrigierbar ist, wobei das korrigierte Signal schließlich von einem Auslösealgorithmus eines Rückhaltesystems in üblicher Weise ausgewertet werden kann.

Weiterhin ist es vorteilhaft, dass die erfindungsgemäße Sensoreinrichtung zur Erkennung bestimmter Aufpralltypen bzw. Crash-Typen bzw. derartiger Situationen eingesetzt werden kann.

Somit ist es zweckmäßig, dass eine zuverlässige Basis zur Generierung einer Auslöseunterscheidung bereitgestellt wird.

Es sei darauf hingewiesen, dass sich der Ausdruck "Aufprall eines sich bewegenden Objekts" auf eine Bewegungsänderung des Fahrzeugs aufgrund des Aufpralls bezieht, da sich das Fahrzeug vor dem Aufprall nicht selbst bewegt haben muss, d.h. es kann stehend von einem anderen Aufprallobjekt getroffen werden oder zwei (sich bewegende) Objekte können aufeinander aufprallen.

Gemäß der vorliegenden Erfindung ist die erste und die weiteren Sensoreinrichtungen als ein Beschleunigungssensor ausgebildet.

Gemäß der vorliegenden Erfindung weist die Auswerteeinrichtung eine erste Aufprallstärke-Bestimmungseinheit zur Bestimmung einer Aufprallstärke in der Erfassungsrichtung, die die Richtung der Fahrzeuglängsachse ist, und zur Ausgabe eines ersten Aufprallstärkesignals auf.

Gemäß noch einer weiteren bevorzugten Weiterbildung der vorliegenden Erfindung weist die Auswerteeinrichtung eine zweite Aufprallstärke-Bestimmungseinheit zur Bestimmung einer Aufprallstärke in einer Erfassungsrichtung, die die Fahrzeugläsachse ist, und zur Ausgabe eines zweiten Aufprallstärkesignals auf.

Gemäß der vorliegenden Erfindung sind die ersten und zweiten Sensoreinrichtungen als eine einzige dreidimensionale Beschleunigungserfassungseinheit bereitgestellt, wobei der Vorteil besteht, dass die ersten und mindestens zwei zweiten Sensoreinrichtungen in einem einzigen Beschleunigungserfassungsmodul integriert sind.

Gemäß der vorliegenden Erfindung weisen die ersten und zweiten Sensoreinrichtungen aufeinander senkrecht stehende Erfassungsachsen auf. Gemäß der vorliegenden Erfindung sind die Beschleunigungserfassungsmodule zweifach ausgeführt und an dem Fahrzeug mit einem lateralen Abstand zueinander angeordnet.

Gemäß der vorliegenden Erfindung weist die Auswerteeinrichtung eine Korrektureinheit zur Korrektur des ersten Beschleunigungssignals, das von der ersten Sensoreinrichtung ausgegeben wird, mittels des mindestens einen zweiten Beschleunigungssignals, das von der mindestens einen zweiten Sensoreinrichtung ausgegeben wird, und zur Ausgabe eines korrigierten ersten Beschleunigungssignals auf.

Gemäß der vorliegenden Erfindung wird mittels der ersten und zweiten Sensoreinrichtungen eine dreidimensionale Beschleunigungserfassung bereitgestellt.

Gemäß der vorliegenden Erfindung wird das erste Beschleunigungssignal mittels des mindestens einen zweiten Beschleunigungssignals in der Korrektureinheit, die in der Auswerteeinrichtung eingeschlossen ist, korrigiert, wobei ein korrigiertes erstes Beschleunigungssignal aus der Korrektureinheit ausgegeben wird.

Gemäß der vorliegenden Erfindung wird auf eine Rückfallebene umgeschaltet, wenn eine durch die mindestens eine zweite Sensoreinrichtung erfasste Beschleunigung in ei er Erfassungsrichtung, die unterschiedlich zu der Richtung der Fahrzeuglängachse ist, einen vorbestimmten Anteil der von der ersten Sensoreinrichtung erfassten Beschleunigung in einer Erfassungsrichtung, die die Fahrzeuglängsachse ist, übersteigt.


ZEICHNUNGEN

Ausführungsbeispiele der Erfindung sind in den Zeichnungen dargestellt und in der nachfolgenden Beschreibung näher erläutert.

In den Zeichnungen zeigen:

Fig. 1    ein Blockbild zur Veranschaulichung eines Verfahrens zum Erkennen eines Aufpralls eines Fahrzeugs;

Fig. 2    ein Blockbild eines weiteren Verfahrens zum Erkennen eines Aufpralls eines Fahrzeugs gemäß einem weiteren bevorzugten Ausführungsbeispiel der vorliegenden Erfindung;

Fig. 3    beispielhaft ein Wegdrehen eines Upfront-Sensorsystems um eine y-Achse und eine entsprechende Messwertkorrektur; und

Fig. 4    beispielhaft ein Wegdrehen eines Upfront-Sensorsystems um eine z-Achse und Sensorwegverläufe für zweifach ausgeführte Sensoreinrichtungen, die an einem sich bewegenden Objekt mit einem lateralen Abstand angebracht sind.

BESCHREIBUNG DER AUSFÜHRUNGSBEISPIELE

In den Figuren bezeichnen gleiche Bezugszeichen gleiche oder funktionsgleiche Komponenten oder Schritte.

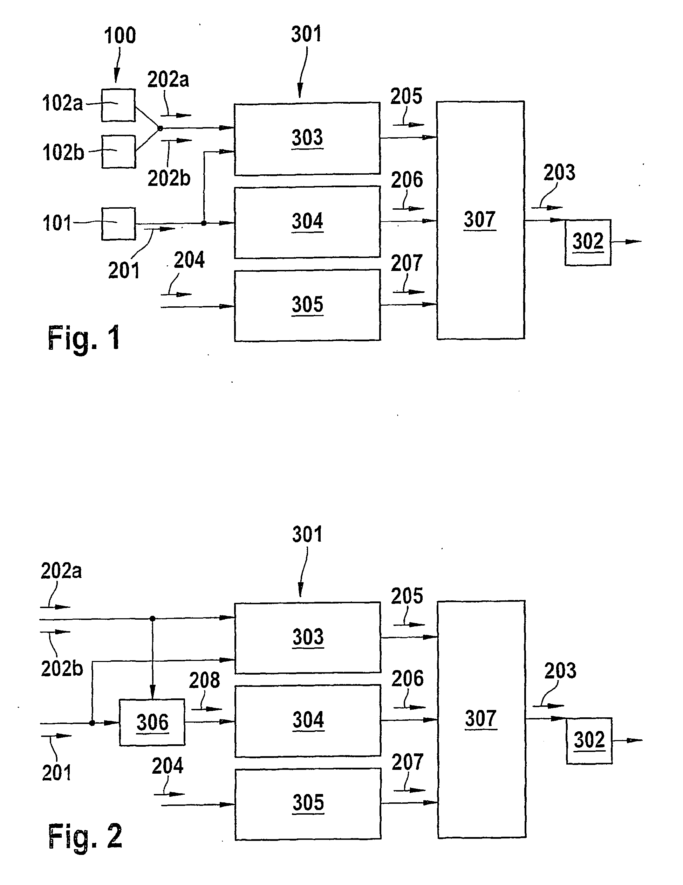

Das in Fig. 1 gezeigte Blockbild veranschaulicht ein Verfahren zum Erkennen eines Aufpralls eines Fahrzeugs 100. Dieses Ausführungsbeispiel gehört nicht zur Erfindung.

Eine Auswerteeinrichtung 301 umfasst als wesentliche Komponenten eine Rotationserfassungseinheit 303, eine erste Aufprallstärke-Bestimmungseinheit 304, eine zweite Aufprallstärke-Bestimmungseinheit 305, eine Berechnungseinheit 307 und eine Ausgabeeinrichtung 302. Der Rotationserfassungseinheit 303 werden die beiden zweiten Beschleunigungssignale 202a und 202b zugeführt. Weiterhin werden der Rotationserfassungseinheit und der ersten Aufprallstärke-Bestimmungseinheit die Signale der ersten Sensoreinrichtung 101, insbesondere das erste Beschleunigungssignal 201 zugeführt.

Ein zentrales Beschleunigungssignal 204 wird der zweiten Aufprallstärke-Bestimmungseinheit 305 von einer zentralen Sensoreinrichtung (nicht gezeigt) zugeführt.

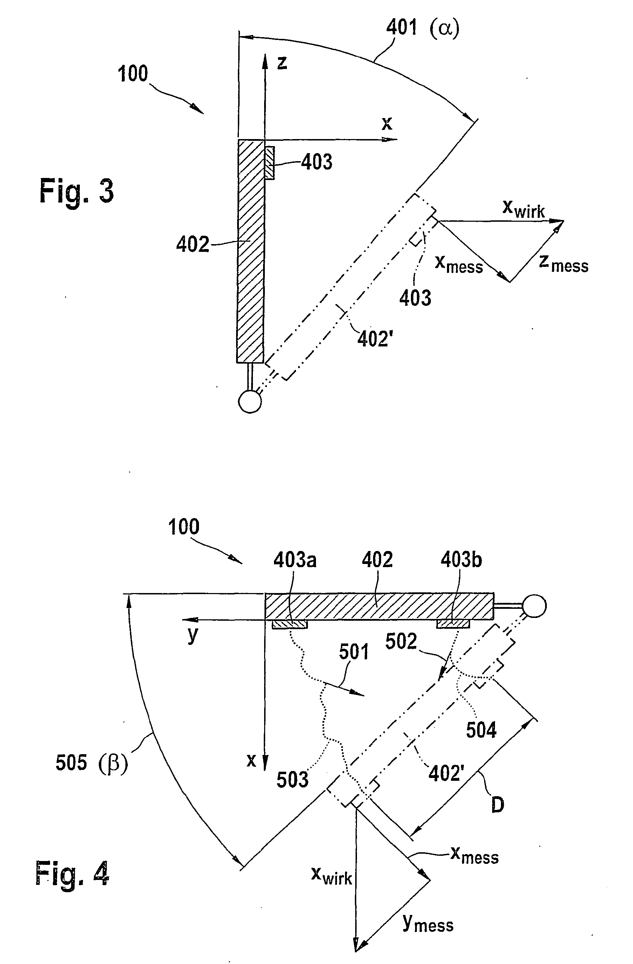

In der ersten Aufprallstärke-Bestimmungseinheit 304 wird aus dem ersten Beschleunigungssignal 201 der ersten Sensoreinrichtung 101 ein erstes Aufprallstärkesignal 206 bestimmt, indem das Signal der ersten Sensoreinrichtung 101 in einer Erfassungsrichtung, die mit einer Bewegungsrichtung x (siehe untenstehend unter Bezugnahme auf die Fig. 3 und 4) des Fahrzeugs 100 übereinstimmt, zugeführt und verarbeitet wird.

Die Ableitung von Beschleunigungssignalen aus herkömmlich verfügbaren Sensoreinrichtungen zur Messung einer Beschleunigung ist dem Fachmann bekannt.

Während die erste Sensoreinrichtung 101 ein erstes Beschleunigungssignal 201 in Abhängigkeit von einer Beschleunigung in x-Richtung (= Richtung der Fahrzeug-Längsachse) ausgibt, sind die zweiten Sensoreinrichtungen 102a und 102b so angeordnet, dass diese eine Erfassungsrichtung y (= Richtung der Fahrzeug-Querachse) und z (= Richtung der Fahrzeug-Hochachse) aufweisen, die unterschiedlich zu der Richtung x des Fahrzeugs 100 ist.

In der Rotationserfassungseinheit 303 wird eine Drehung des Sensors um die y-Achse - im Allgemeinen auch des Fahrzeugs 100 - dadurch erfasst, dass Sensorsignale beispielsweise in x-Richtung und z-Richtung vektoriell addiert werden gemäß der Beziehung

$$x_{wirk} = (x^2_{mess} + z^2_{mess})^{1/2},$$

bzw. einer Drehung um die z-Achse gemäß der folgenden Beziehung

$$x_{wirk} = (x^2_{mess} + y^2_{mess})^{1/2}.$$

Die geometrischen Verhältnisse bei einer Drehung des Sensors um die y-Achse werden untenstehend unter Bezugnahme auf Fig. 3 beschrieben werden, während eine Drehung um die z-Achse untenstehend unter Bezugnahme auf Fig. 4 beschrieben werden wird. Somit werden der Rotationserfassungseinheit 303 Beschleunigungssignale zugeführt, welche aus unterschiedlichen Erfassungsrichtungen - Sensierrichtungen - erhalten wurden.

Das von der Rotationserfassungseinheit 303 ausgegebene Rotationssignal 205 wird nun in der Berechnungseinheit 307 analysiert. In der Berechnungseinheit kann vorbestimmt werden, wann das System auf eine Rückfallebene umschaltet. Diese Rückfallebene kann beispielsweise diejenige Ebene sein, die bereitgestellt wird, wenn an einem Upfront-Sensor ein Defekt festgestellt wird.

Die Berechnungseinheit stellt somit eine Betriebsweise bereit, in welcher dann auf eine Rückfallebene umgeschaltet wird, wenn eine durch die mindestens eine zweite Sensoreinrichtung 102a, 102b erfasste Beschleunigung in einer Erfassungsrichtung y, z, die unterschiedlich zu der Längsachse x des sich bewegenden Objekts 100 ist, einen vorbestimmten Anteil der von der ersten Sensoreinrichtung 101 erfassten Beschleunigung in einer Erfassungsrichtung, die mit der Längsachse x des sich bewegenden Objekts übereinstimmt, übersteigt. Um diese Berechnung durchzuführen, werden der Berechnungseinheit 307 weiterhin die Ausgangssignale der ersten und zweiten Aufprallstärke-Bestimmungseinheiten 304 bzw. 305 zugeführt.

Das Ausgangssignal der ersten Aufprallstärke-Bestimmungseinheit 304 wird der Berechnungseinheit 307 als ein erstes Aufprallstärkesignal 206 zugeführt, welches eine Aufprallstärke in x-Bewegungsrichtung des Fahrzeugs 100 widerspiegelt, d.h. in der Erfassungsrichtung x. Dieses erste Aufprallstärkesignal 206 ist somit abhängig von dem von der ersten Sensoreinrichtung 101 ausgegebenen ersten Beschleunigungssignal 201.

Weiterhin ist eine zentrale Aufprallsensierung bereitgestellt (Sensoreinrichtung nicht gezeigt), welche eine Aufprallstärke zentral erfasst, wobei ein zweites Aufprallstärkesignal 207 aus der zweiten Aufprallstärke-Bestimmungseinheit 305 ausgegeben wird. Durch die der Berechnungseinheit 307 zugeführten Signale, d.h. durch die Zuführung des Rotationssignals 205, des ersten Aufprallstärkesignals 206 und des zweiten Aufprallstärkesignals 207 ist nun eine ausreichende Information vorhanden, um bei einer entsprechenden Anordnung der ersten und zweiten Sensoreinrichtungen 101, 102a und 102b zweidimensionale und/oder dreidimensionale Erfassungen der Beschleunigungsrichtung bereitzustellen.

Somit ist es weiterhin möglich, eine Aufprallstärke richtungsabhängig zu erfassen. Dies ermöglicht es weiterhin in vorteilhafter Weise, dass eine reduzierte Information, welche zu einer verspäteten Auslösung oder gar kompletten Unterdrückung einer Auslösung von Rückhaltesystemen führen kann, vermieden wird.

Die Rotationserkennung bzw. -berechnung kann beispielsweise so ausgeführt sein, dass gerichtete oder absolute Signalkomponenten, die in den einzelnen Raumrichtungen erfasst werden, aufkumuliert werden, so dass die Beschleunigungssignale 201, 202a, 202b der einzelnen Erfassungsrichtungen x, y, z vektoriell aufsummiert werden.

Auf diese Weise wird es möglich, die aus zusätzlichen Erfassungsrichtungen bekannten Beschleunigungssignale zur Bereitstellung der folgenden Prozeduren heranzuziehen:

(i) Erkennung einer reduzierten Information und Umschaltung auf eine Rückfallebene, d.h. eine Ebene, welche auch bei einem Defekt eines Upfront-Sensors verwendet wird, so dass das Auslöseverhalten ohne die Information der Upfront-Sensorik bestimmbar ist,

(ii) Korrigieren des in x-Richtung gemessenen Beschleunigungssignals, welches durch das Wegdrehen in seiner Größe verfälscht ist, mittels der gemessenen Signale aus den y/z-Richtungen und Zuführen des korrigierten Signals zu der Berechnungseinheit 307, und

(iii) Bestimmung und Erkennung von Aufpralltypen bzw. Crash-Typen, um weiterhin vorteilhaft eine Auslöseentscheidung zu generieren.

Durch eine Aufkumulierung, wie obenstehend beschrieben, kann bestimmt werden, ob sich eine Sensoreinrichtung über ein zulässiges Maß hinaus aus einer definierten Erfassungsrichtung, beispielsweise der x-Bewegungsrichtung, herausgedreht hat.

Es ist somit in der Berechnungseinheit 307 möglich, die genaue Situation eines Aufpralls an Hand von Beschleunigungssignalen in mehrfachen Raumrichtungen zu erkennen. In vorteilhafter Weise werden drei Sensoreinrichtungen 101, 102a, 102b herangezogen, deren Erfassungsachsen x, y bzw. z aufeinander senkrecht stehen. Somit wird eine dreidimensionale Erfassung des Beschleunigungsvektors während eines Fahrzeugaufpralls möglich. Diese dreidimensionale Erfassung des Beschleunigungsvektors bietet die Grundlage zur Angabe eines Aufpralltyps bzw. Crash-Typs.

Der Aufpralltyp wird somit an Hand der Richtung und Größe des Beschleunigungssignals bestimmbar. Dieser Aufpralltyp wird in Form eines Klassifizierungssignals 203 aus der Berechnungseinheit 307 ausgegeben und der Ausgabeeinrichtung 302 zugeführt. Das aus der Ausgabeeinrichtung 302 ausgegebene Klassifizierungssignal dient nun weiteren Steuerungszwecken, beispielsweise einer präzisen Auslösung eines Rückhaltesystems eines Fahrzeugs.

Fig. 2 zeigt zusätzlich eine in der Auswerteeinrichtung 301 enthaltene Korrektureinheit 306, welche befähigt ist, ein korrigiertes erstes Beschleunigungssignal 208 auszugeben. Die übrigen Komponenten und Signale entsprechen den in Fig. 1 gezeigten und werden hier, um eine überlappende Beschreibung zu vermeiden, nicht näher erläutert.

Wie in Fig. 2 gezeigt, werden der Korrektureinheit 306 sowohl das erste Beschleunigungssignal 201, welches durch die erste Sensoreinrichtung 101 bereitgestellt wird, als auch mindestens ein zweites Beschleunigungssignal 201a, 20 1 b, welches durch die mindestens eine zweite Sensoreinrichtung 102a, 102b bereitgestellt wird, zugeführt.

Durch eine Erfassung einer Beschleunigung in einer Richtung, welche von der Erfassungsrichtung der ersten Sensoreinrichtung 101 unterschieden ist, wird es somit möglich, das von der ersten Sensoreinrichtung 101 bereitgestellte erste Beschleunigungssignal 201 zu korrigieren.

Die Korrektur bei einer Drehung des Sensors um die y-Achse (siehe Fig. 3) wird durch die folgende Gleichung beschrieben

$$x_{\text{wirk}} = (x^2_{\text{mess}} + z^2_{\text{mess}})^{1/2},$$

während eine Drehung um eine z-Achse (siehe Fig. 4) durch die folgende Gleichung beschrieben wird

$$x_{wirk} = (x^2_{mess} + y^2_{mess})^{1/2}.$$

Somit ist es möglich, eine wirksame Größe des Beschleunigungssignal der ersten Sensoreinrichtung, die in der Regel als ein Upfront-Sensor ausgebildet ist, und in den obigen Beziehungen als $x_{wirk}$ bezeichnet wird, aus den gemessenen Beschleunigungen $x_{mess}$ in x-Richtung und $z_{mess}$ in z-Richtung bzw. $y_{mess}$ in y-Richtung zu bestimmen.

Fig. 3 veranschaulicht ein Beispiel eines in der Korrektureinheit 306 ausführbaren Verfahrens zur Korrektur einer Drehung um die y-Achse, welche in diesem Ausführungsbeispiel der vorliegenden Erfindung einer Fahrzeugquerachse entspricht. Eine Drehung des Sensors um die y-Achse wird beispielsweise hervorgerufen durch ein Wegdrehen der Aufhängung des Upfront-Sensors bei einer LKW-Unterfahrt. Der erste Auslenkwinkel $\alpha$, bezeichnet durch ein Bezugszeichen 401, kann dabei unterschiedliche Werte annehmen:

$\alpha \approx 0$: durchgängige hohe Barriere wie eine starre Wand,

$\alpha > 0$: hochgesetzte Barriere z.B. LKW-Unterfahrt; und

$\alpha < 0$: niedrige Barriere wie beispielsweise ein Sportwagen etc.

Hierbei wird angenommen, dass der Upfront-Sensor 403 auf einem starren Halteelement 402 angebracht ist, welches sich bei einem Aufprall um den Winkel $\alpha$ 401 aus der x-Richtung wegdreht.

Die Wirkungsrichtungen $x_{mess}$, $z_{mess}$, welche die wirksame Beschleunigung in x-Richtung, $x_{wirk}$ ergeben, sind in Fig. 3 ebenfalls angegeben.

Fig. 4 zeigt schließlich eine Anordnung, in welcher ein erster Upfront-Sensor 403a und ein zweiter Upfront-Sensor 403b auf einem gemeinsamen Halteelement 402 angeordnet sind. In dem in Fig. 4 gezeigten Beispiel ist der Fall einer Drehung um die Hochachse (z-Richtung) des Fahrzeugs dargestellt.

Ebenfalls sind Größen abgeleitet, welche in einem Auslösealgorithmus wie oben beschrieben vorteilhaft eingesetzt werden können. Hierbei legen die beiden Upfront-Sensoren 403a bzw. 403b bei der gezeigten Auslenkung um einen zweiten Auslenkwinkel $\beta$, 505 unterschiedliche Wege zurück, die gemäß der folgenden Beziehungen berechenbar sind. So gilt für den ersten Upfront-Sensor 403a

$$\vec{s}_1 = \int \vec{u}_1(t)dt \qquad\qquad (1),$$

während der zurückgelegte Weg des zweiten Upfront-Sensors 403b durch die folgende Beziehung gegeben ist:

$$\vec{s}_2 = \int \vec{u}_2(t)dt$$

In den obigen Gleichungen (1) und (2) berechnen sich die Größen $u_1$ bzw. $u_2$ durch die folgende Beziehung

$$\vec{u}_i = \vec{d}_{ix} + \vec{d}_{iy} + \vec{d}_{iz}$$

wobei für den Index i gilt i = 1,2.

Die Gesamtbewegung, die das Fahrzeug bei einer Abbremsung bzw. einem Aufprall zurücklegt, ergibt sich durch die folgende Beziehung

$$\vec{s}_{ECU} = \int \vec{u}_{ECU}dt$$

aus welcher die relativen Eindringungen berechenbar sind.

Somit ergibt sich für eine relative Eindringung von vorne links ein Wert von $s_{1x}$-$s_{ECU}$, für eine relative Eindringung von vorne rechts $s_{2x}$-$s_{ECU}$, während sich für eine relative Eindringung von der Seite links ergibt $s_{1y}$-$s_{2y}$ und eine relative Eindringung von der Seite rechts $s_{2y}$-$s_{1y}$.

Durch die erfindungsgemäße Vorrichtung zur Aufprallerkennung ist ein rechtzeitiges Umschalten auf eine Rückfallebene möglich, falls ein Anteil von $y_{mess}$ bezüglich $x_{mess}$ einen vorbestimmten Wert überschreitet.

Eine Verwendung der relativen Eindringung (bzw. des Winkels β, d.h. des zweiten Auslenkwinkels 505) ermöglicht eine Aufprall-Klassifizierung hinsichtlich einer Erkennung eines Offset-Crashes durch eine relative Eindringung vorne |links-rechts| >> 0, eine Erkennung 100 % Überdeckung durch relative Eindringung |links-rechts| ≈ 0 und eine Erkennung eines Winkels durch relative Eindringung Seite |links-rechts| >> 0.

Somit ermöglichen es die erfindungsgemäße Vorrichtung und das erfindungsgemäße Verfahren, Crash-Typen zuverlässig zu erkennen und einen Auslösemechanismus eines Rückhaltesystems entsprechend der erkannten Crash-Typen zu steuern.

In dem in Fig. 4 gezeigten Beispiel einer Drehung um die z-Achse legen die beiden Upfront-Sensoren 403a, 403b unterschiedliche Wege zurück, wodurch der Winkel β, d.h. der zweite Auslenkwinkel 505 bestimmbar ist. Hierzu muss der laterale Sensorabstand D, in welchem die ersten und zweiten Upfront-Sensoren 403a und 403b auf dem Halteelement 402 angebracht sind, bekannt sein.

Die gestrichelten Linien in Fig. 4 bezeichnen jeweils die von den entsprechenden Upfront-Sensoren zurückgelegten Sensorwegverläufe 503 bzw. 504, d.h. der erste Upfront-Sensor 403a legt den ersten Sensorweg 501 zurück, während der zweite Upfront-Sensor 403b den zweiten Sensorweg 502 zurücklegt.

Der gesamte Sensorwegverlauf für die beiden Upfront-Sensoren ist durch die gestrichelte Linie in Fig. 4 dargestellt, d.h. ein erster Sensorwegverlauf 503 betreffend den ersten Upfront-Sensor 403a und ein zweiter Sensorwegverlauf 504 betreffend den zweiten Upfront-Sensor 403b.

Somit ist es möglich, eine zuverlässige Aufpralltyp-Erkennung auch dann durchzuführen, wenn sich während eines Aufpralls das Halteelement 402 aus seiner ursprünglich vorgesehenen Lage beispielsweise um die z-Achse in die bei dem Bezugszeichen 402' dargestellte Lage dreht.

Obwohl die vorliegende Erfindung vorstehend anhand bevorzugter Ausführungsbeispiele beschrieben wurde, ist sie darauf nicht beschränkt, sondern auf vielfältige Weise modifizierbar.

Auch ist die Erfindung nicht auf die genannten Anwendungsmöglichkeiten beschränkt.

**Patentansprüche**

1. Vorrichtung zur Aufprallerkennung eines Fahrzeugs (100), mit:

   a) einer ersten Sensoreinrichtung (101) zur Erfassung einer ersten Beschleunigung in einer ersten Erfassungsrichtung ($x_{mess}$), die die Richtung der Fahrzeuglängsachse (x) ist, und zur Ausgabe eines ersten von der ersten Beschleunigung abhängigen Beschleunigungssignals (201);
   b) einer Auswerteeinrichtung (301) zur Auswertung des ersten Beschleunigungssignals (201) derart, dass eine Klassifizierung eines Aufpralls mittels eines Klassifizierungssignals (203) bereitgestellt wird;
   c) einer Ausgabeeinrichtung (302) zur Ausgabe des Klassifizierungssignals (203) an externe Steuerungseinrichtungen,
   d) zwei weitere Sensoreinrichtungen (102a, 102b) zur Erfassung von zwei weiteren Beschleunigungen in zwei weiteren Erfassungsrichtungen ($y_{mess}$, $z_{mess}$), die senkrecht auf der ersten Erfassungsrichtung ($x_{mess}$) der ersten Sensoreinrichtung (101) stehen, und zur Ausgabe von zwei weiteren Beschleunigungssignalen (202a, 202b);
   e) wobei die Auswerteeinrichtung (301) eine Korrektureinheit (306) zur Korrektur des ersten Beschleunigungssignals mittels der weiteren Beschleunigungssignale (202a, 202b) und zur Ausgabe eines korrigierten ersten Beschleunigungssignals (208) aufweist,

   wobei die erste (101) und die weiteren Sensoreinrichtungen (102a, 102b) als eine einzige dreidimensionale Beschleunigungserfassungseinheit bereitgestellt sind und in einem einzigen Beschleunigungserfassungsmodul integriert sind, wobei die Beschleunigungserfassungsmodule zweifach ausgeführt und an dem Fahrzeug mit einem lateralen Abstand zueinander angeordnet sind, wobei die Beschleunigungserfassungsmodule als Upfrontsensorik ausgeführt sind,
   wobei die Auswerteeinrichtung (301) eine erste Aufprallstärkebestimmungseinheit (304) zur Bestimmung einer Aufprallstärke in Richtung der Fahrzeuglängsachse (x), und zur Ausgabe eines ersten Aufprallstärkesignals (206) aufweist, welcher das korrigierte erste Beschleunigungssignal (208) der Korrektureinheit (306) zugeführt ist,
   wobei eine Berechnungseinheit (307) vorgesehen ist, die unter Berücksichtigung des ersten Aufprallsignals (206) das Klassifizierungssignal (203) ermittelt, und die auf eine Rückfallebene umschaltet, wenn ein durch die weiteren Sensoreinrichtungen (102a, 102b) erfasstes Beschleunigungssignal in einer der weiteren Erfassungsrichtungen einen vorbestimmten Anteil der von der ersten Sensoreinrichtung (101) erfassten ersten Beschleunigung in der ersten Erfassungsrichtung übersteigt, wobei in der Rückfallebene ein Auslöseverhalten ohne eine Information der Upfrontsensorik bestimmbar ist.

2. Vorrichtung nach Anspruch 1,
**dadurch gekennzeichnet,**
**dass** die Auswerteeinrichtung (301) eine zweite Aufprallstärke-Bestimmungseinheit (305) zur Bestimmung einer Aufprallstärke in der ersten Erfassungsrichtung und zur Ausgabe eines zweiten Aufprallstärkesignals (207) aufweist.

3. Verfahren zum Erkennen eines Aufpralls eines Fahrzeugs, mit den Schritten:

a) Erfassen einer Beschleunigung in einer ersten Erfassungsrichtung ($x_{mess}$), die die Richtung der Fahrzeuglängsachse ist, mit einer ersten Sensoreinrichtung (101), und Ausgeben eines ersten, von der Beschleunigung in der ersten Erfassungsrichtung ($x_{mess}$) abhängigen Beschleunigungssignals (201) aus der Sensoreinrichtung (101);
b) Auswerten des ersten Beschleunigungssignals (201) in einer Auswerteeinrichtung (301) derart, dass eine Klassifizierung eines Aufpralls mittels eines Klassifizierungssignals (203) bereitgestellt wird;
c) Ausgeben des Klassifizierungssignals (203) an externe Steuerungseinrichtungen mittels einer Ausgabeeinrichtung (302),
d) wobei zwei weitere Beschleunigungen in zwei weiteren Erfassungsrichtungen ($y_{mess}$, $z_{mess}$), die senkrecht auf der ersten Erfassungsrichtung ($x_{mess}$) stehen, mittels zwei weiterer Sensoreinrichtungen (102a, 102b) erfasst werden und als zwei weitere, von den zwei weiteren Beschleunigungen abhängige Beschleunigungssignale (202a, 202b)
ausgegeben werden;
e) wobei das erste Beschleunigungssignal (201) mittels der zwei weiteren Beschleunigungssignale (202a, 202b) korrigiert wird und ein korrigiertes erstes Beschleunigungssignal (208) ausgegeben wird,

wobei eine Aufprallstärke in der ersten Erfassungsrichtung mittels einer ersten Aufprallstärke-Bestimmungseinheit (304), die in der Auswerteeinrichtung (301) eingeschlossen ist, bestimmt wird, wobei ein erstes Aufprallstärkesignal (206) aus der ersten Aufprallstärke-Bestimmungseinheit (304) ausgegeben wird, wobei der Aufprallstärke-Bestimmungseinheit (304) dafür das erste korrigierte Beschleunigungssignal (208) zugeführt wird,
wobei unter Berücksichtigung des ersten Aufprallstärkesignals (206) das Klassifizierungssignal ermittelt wird,
wobei auf eine Rückfallebene umgeschaltet wird, wenn ein durch die weiteren Sensoreinrichtungen (102a, 102b) erfasstes Beschleunigungssignal in einer der weiteren Erfassungsrichtungen einen vorbestimmten Anteil der von der ersten Sensoreinrichtung (101) erfassten ersten Beschleunigung in der ersten Erfassungsrichtung übersteigt, wobei in der Rückfallebene ein Auslöseverhalten ohne eine Information der Upfrontsensorik bestimmt wird.

4. Verfahren nach Anspruch 3,
**dadurch gekennzeichnet,**
**dass** eine Aufprallstärke in der ersten Erfassungsrichtung mittels einer zweiten Aufprallstärke-Bestimmungseinheit (305), die in der Auswerteeinrichtung (301) eingeschlossen ist, bestimmt wird, wobei ein zweites Aufprallstärkesignal (207) aus der zweiten Aufprallstärke-Bestimmungseinheit (305) ausgegeben wird.

**Claims**

1. Apparatus for identifying an impact of a vehicle (100), comprising:

a) a first sensor device (101) for detecting a first acceleration in a first detection direction ($x_{meas}$), which is the direction of the vehicle longitudinal axis (x), and for outputting a first acceleration signal (201) dependent on the first acceleration;
b) an evaluation device (301) for evaluating the first acceleration signal (201) in such a way that a classification of an impact is provided by means of a classification signal (203);
c) an output device (302) for outputting the classification signal (203) to external control devices,
d) two further sensor devices (102a, 102b) for detecting two further accelerations in two further detection directions ($y_{meas}$, $z_{meas}$), which are perpendicular to the first detection direction ($x_{meas}$) of the first sensor device (101), and for outputting two further acceleration signals (202a, 202b);
e) wherein the evaluation device (301) has a correction unit (306) for correcting the first acceleration signal by means of the further acceleration signals (202a, 202b) and for outputting a corrected first acceleration signal (208),

wherein the first (101) and the further sensor devices (102a, 102b) are provided as a single three-dimensional acceleration detection unit and are integrated in a single acceleration detection module, wherein the acceleration detection modules are embodied twice and arranged on the vehicle at a lateral distance from one another, wherein the acceleration detection modules are embodied as upfront sensor system,
wherein the evaluation device (301) has a first impact intensity determination unit (304) for determining an impact intensity in the direction of the vehicle longitudinal axis (x), and for outputting a first impact intensity signal (206), to which unit is fed the corrected first acceleration signal (208) of the correction unit (306),
wherein a calculation unit (307) is provided, which determines the classification signal (203) taking account of the first impact signal (206), and which switches over to a fallback level if an acceleration signal detected by the further sensor devices (102a, 102b) in one of the further detection directions exceeds a predetermined proportion of the first acceleration detected by the first sensor device (101) in the first detection direction, wherein in the fallback level a triggering behaviour can be determined without information of the upfront sensor system.

2. Apparatus according to Claim 1,
   **characterized**
   **in that** the evaluation device (301) has a second impact intensity determination unit (305) for determining an impact intensity in the first detection direction and for outputting a second impact intensity signal (207).

3. Method for identifying an impact of a vehicle, comprising the following steps:

   a) detection of an acceleration in a first detection direction ($x_{meas}$), which is the direction of the vehicle longitudinal axis, by means of a first sensor device (101), and outputting of a first acceleration signal (201), which is dependent on the acceleration in the first detection direction ($x_{meas}$), from the sensor device (101);
   b) evaluation of the first acceleration signal (201) in an evaluation device (301) in such a way that a classification of an impact is provided by means of a classification signal (203);
   c) outputting of the classification signal (203) to external control devices by means of an output device (302),
   d) wherein two further accelerations in two further detection directions ($y_{meas}$, $z_{meas}$), which are perpendicular to the first detection direction ($x_{meas}$), are detected by means of two further sensor devices (102a, 102b) and are output as two further acceleration signals (202a, 202b) dependent on the two further accelerations;
   e) wherein the first acceleration signal (201) is corrected by means of the two further acceleration signals (202a, 202b) and a corrected first acceleration signal (208) is output,

   wherein an impact intensity in the first detection direction is determined by means of a first impact intensity determination unit (304) included in the evaluation device (301), wherein a first impact intensity signal (206) is output from the first impact intensity determination unit (304), wherein the first corrected acceleration signal (208) is fed to the impact intensity determination unit (304) for this purpose,
   wherein the classification signal is determined taking account of the first impact intensity signal (206),
   wherein a switch-over to a fallback level is effected if an acceleration signal detected by the further sensor devices (102a, 102b) in one of the further detection directions exceeds a predetermined proportion of the first acceleration detected by the first sensor device (101) in the first detection direction, wherein in the fallback level a triggering behaviour is determined without information of the upfront sensor system.

4. Method according to Claim 3,
   **characterized**
   **in that** an impact intensity in the first detection direction is determined by means of a second impact intensity determination unit (305) included in the evaluation device (301), wherein a second impact intensity signal (207) is output from the second impact intensity determination unit (305).

**Revendications**

1. Dispositif de reconnaissance de collision pour un véhicule (100) comprenant

   (a) une première installation de capteur (101) pour saisir une première accélération dans une première direction de saisie ($x_{mess}$) qui est celle de l'axe longitudinal (x) du véhicule et pour émettre un premier signal d'accélération (201) dépendant de la première accélération,

(b) une installation d'exploitation (301) pour exploiter le premier signal d'accélération (201), pour permettre une classification de la collision à l'aide d'un signal de classification (203),

(c) une installation d'émission (302) pour fournir le signal de classification (203) à des installations de commande, externes,

(d) deux autres installations de capteur (102a, 102b) pour saisir deux autres accélérations dans deux autres directions de saisie ($y_{mess}$, $z_{mess}$), perpendiculaires à la première direction de saisie ($x_{mess}$) de la première installation de capteur (101) et pour émettre deux autres signaux d'accélération (202a, 202b),

(e) l'installation d'exploitation (301) ayant une unité de correction (306) pour corriger le premier signal d'accélération à l'aide des autres signaux d'accélération (202a, 202b) et pour émettre un premier signal d'accélération corrigé (208),

la première installation (101) et les autres installations de capteur (102a, 102b) sont réalisées sous la forme d'une seule unité de saisie d'accélération à trois dimensions et elles sont intégrées dans un unique module de saisie d'accélération, ce module étant doublé et les deux modules sont installés sur le véhicule avec une distance latérale, les modules de saisie d'accélération étant réalisés sous la forme de capteurs frontaux, l'installation d'exploitation (301) ayant une première unité de détermination de l'intensité de la collision (304) pour déterminer une intensité de collision dans la direction de l'axe longitudinal (x) du véhicule et pour émettre un premier signal d'intensité de collision (206) qui reçoit le premier signal d'accélération (208), corrigé de l'unité de correction (306), une unité de calcul (307) tenant compte du premier signal de collision (206) déterminant le signal de classification (203) et commutant sur un plan de retour si un signal d'accélération saisi par les autres installations de capteur (102a, 102b) dépasse dans l'une des autres directions de saisie, une fraction prédéterminée de la première accélération saisie par la première installation de capteur (101) dans la première direction de saisie, et dans le plan de retour on détermine un comportement de déclenchement sans une information des capteurs frontaux.

2. Dispositif selon la revendication 1,
**caractérisé en ce que**
l'installation d'exploitation (301) comporte une seconde unité de détermination de l'intensité de la collision (305) pour déterminer une intensité de collision dans la première direction de saisie et pour émettre un second signal d'intensité de collision (207).

3. Procédé de reconnaissance d'une collision d'un véhicule comprenant les étapes suivantes :

(a) saisie d'une accélération dans une première direction de saisie ($x_{mess}$) qui est la direction de l'axe longitudinal du véhicule à l'aide d'une première installation de capteur (101) et émission d'un premier signal d'accélération (201) dépendant de l'accélération dans la première direction de saisie ($x_{mess}$) à partir de l'installation de capteur (101),

(b) exploitation du premier signal d'accélération (201) dans une installation d'exploitation (301) pour fournir une classification de la collision à l'aide d'un signal de classification (203),

(c) émission du signal de classification (203) vers des installations de commande, externes à l'aide d'une installation d'émission (302),

(d) on saisit deux autres accélérations dans deux autres directions de saisie ($y_{mess}$, $z_{mess}$) perpendiculaires à la première direction de saisie ($x_{mess}$) à l'aide de deux autres installations de capteur (102a, 102b) et fournissant ces accélérations à l'aide de deux autres signaux d'accélération (202a, 202b) dépendant des deux autres accélérations,

(e) le premier signal d'accélération (201) étant corrigé à l'aide des deux autres signaux d'accélération (202a, 202b) pour émettre un premier signal d'accélération corrigé (208),

on détermine une intensité de collision dans la première installation de saisie à l'aide d'une première unité de détermination d'intensité de collision (304) faisant partie de l'installation d'exploitation (301), on émet un premier signal d'intensité de collision (206) à partir de la première unité de détermination d'intensité de collision (304), l'unité de détermination de l'intensité de collision (304) recevant pour cela le premier signal d'accélération corrigé (208), en tenant compte du premier signal d'intensité de collision (206) on détermine le signal de classification, on commute sur un plan de retour si un signal d'accélération saisi par les autres installations de capteur (102a, 102b) dans l'une des autres directions de saisie dépasse une fraction prédéterminée de la première accélération saisie par la première installation de capteur (101) dans la première direction de saisie, et dans le plan de retour on détermine un comportement de déclenchement (100) d'une information des capteurs frontaux.

4. Procédé selon la revendication 3,
   **caractérisé en ce qu'**
   on détermine une intensité de collision dans la première direction de saisie à l'aide d'une seconde unité de détermination d'intensité de collision (305) faisant partie de l'installation d'exploitation (301) et on émet un second signal d'intensité de collision (207) à partir de l'unité de détermination de la seconde intensité de collision (305).

Fig. 1

Fig. 2

## Fig. 3

## Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19609290 C2
- WO 9806604 A1

- EP 0980323 A